# FASCICULE DE BREVET EUROPEEN

(11) **EP 0 734 104 B1**
(45) Date de publication et mention de la délivrance du brevet: **01.09.1999**
(21) Numéro de dépôt: 96400534.2
(22) Date de dépôt: 15.03.1996
(51) Int. Cl.: H01R 31/08, H01R 9/24

(54) **Réglette de connexion de lignes à haut débit et ensemble résultant de connexion**
Anschlussleiste für Leitungen mit hoher Datenrate und resultierende Anschlussvorrichtung
Connection block for high rate lines and resulting connection assembly

(30) Priorité: 20.03.1995 FR 9503209
(43) Date de publication de la demande: 25.09.1996
(73) Titulaire: ALCATEL, 75008 Paris (FR)
(72) Inventeur: Vermon, Virginie, 08200 Sedan (FR); Audeval, Fabrice, 08000 Charleville Mezieres (FR)
(74) Mandataire: Buffière, Michelle

(56) Documents cités:
- WO-A-92/08255
- DE-A- 2 719 269
- DE-C- 3 902 575
- US-A- 4 541 682
- US-A- 4 866 575
- US-A- 4 907 263
- US-A- 5 356 309

## Description

La présente invention porte sur une réglette de connexion de lignes à haut débit, en particulier de lignes de télécommunication ou de transmission de données, pour lesquelles il est nécessaire de limiter la diaphonie entre lignes raccordées à la réglette. Elle porte également sur un ensemble résultant de connexion, constitué de réglettes assemblées sur un châssis.

Ces lignes comportent chacune un ensemble de conducteurs isolés individuellement, par exemple une ou plusieurs paires. Elles peuvent être écrantées et comporter alors chacune en outre un fil d'écran. Elles peuvent également appartenir à un câble, qui est lui-même écranté. Ce sont en particulier des lignes à 100 MHz.

Cette réglette est du type comportant un corps isolant allongé et deux rangées de contacts autodénudants montés dans le corps, en étant d'une rangée à l'autre en vis-à-vis et reliés électriquement dans le corps. Elle assure le raccordement de lignes d'entrée à des lignes de sortie ou le raccordement de lignes d'entrée ou de sortie à des jarretières de brassage, ces jarretières de brassage comportant chacune le même nombre de conducteurs que les lignes. Des jeux de contacts autodénuants successifs sur chaque rangée reçoivent les conducteurs des lignes ou des jarretières.

D'une manière générale, on limite la diaphonie entre lignes adjacentes sur la réglette en éloignant les jeux de contacts autodénudants les uns des autres ou en associant des écrans de masse aux jeux de contacts autodénudants sur chaque rangée.

Le document US-A-5 000 703 décrit une réglette de connexion de lignes écrantées, comportant un corps isolant, au moins une rangée de contacts autodénudants montés à pas régulier dans le corps et des éléments de connexion d'écran reliés à certains des contacts autodénudants de chaque rangée. Chacun de ces éléments de connexion d'écran est une pièce conductrice en forme de U. Ses deux branches sont séparées l'une de l'autre d'une distance égale au moins à deux fois le pas des contacts autodénudants sur leur rangée et sont insérées dans deux des contacts correspondants de la rangée. Sa base s'étend sur l'extérieur du corps, parallèlement à la rangée de contacts autodénudants, quand les branches sont insérées dans deux contacts autodénudants, et comporte un contact de connexion du fil d'écran de l'une des lignes. Lorsque les lignes écrantées comportent une paire de conducteurs et un fil d'écran, il leur correspond donc sur chaque rangée des jeux de quatre contacts autodénudants dont les deux contacts autodénudants extrêmes reçoivent les deux branches de l'un des éléments de connexion d'écran et les deux contacts autodénudants intérieurs reçoivent les deux conducteurs de la ligne ayant son fil d'écran connecté à l'élément de connexion les encadrant.

Dans cette réglette, ayant pour chaque ligne des contacts autodénudants pour les conducteurs de cette ligne, un élément de connexion d'écran et deux contacts autodénudants supplémentaires, les contacts autodénudants supplémentaires dans les jeux de contacts constituent des écrans de masse dès lors que les lignes sont écrantées et que leur fil d'écran est relié aux éléments de connexion d'écran. La réglette assure dans ces conditions une réduction satisfaisante de diaphonie entre les lignes, mais devient de dimensions et de coût relativement importants.

La présente invention a pour but de limiter au maximum la diaphonie entre lignes raccordées à une réglette de connexion, en n'imposant pas que ces lignes soient écrantées pour autant et en minimisant le coût et les dimensions de la réglette. Elle a également pour but de réaliser un ensemble compact de telles réglettes.

Elle a pour objet une réglette de connexion de lignes à haut débit, comportant un corps isolant allongé et deux rangées de contacts autodénudants montés dans le corps en étant en vis-à-vis et reliés électriquement deux à deux, d'une rangée à l'autre, et en définissant des jeux successifs le long de chaque rangée, les contacts de chaque jeu de l'une des rangées étant affectés d'une part à l'une des lignes et d'autre part à la constitution d'au moins un écran de masse terminal dans le jeu, caractérisée en ce qu'elle comporte, dans chaque jeu de contacts, un seul des deux contacts terminaux affecté à la constitution d'un seul écran de masse et dit contact de masse et un collecteur de masse retenu le long dudit corps, relié à une masse extérieure et pourvu de languettes de liaison électrique aux contacts de masse en vis-à-vis des deux rangées, à l'intérieur dudit corps.

Cette réglette présente avantageusement en outre au moins l'une des caractéristiques additionnelles suivantes :
- lesdits contacts autodénudants montés dans le corps présentent un premier pas entre eux dans chaque jeu et un deuxième pas, supérieur au premier, de l'un des jeux au suivant dans chaque rangée,
- le long de chaque rangée, lesdits contacts autodénudants sont montés en biais ou perpendiculairement à leur rangée, au moins dans une partie dite avant dudit corps, avec une valeur dudit premier pas inférieure à 5 mm et une valeur du deuxième pas de l'ordre de 5 mm,
- ledit corps isolant comporte un berceau allongé de section droite en U, présentant un fond et deux côtés latéraux, dans lequel sont assemblés des modules de connexion formés chacun d'un bloc isolant parallélépipédique équipé de deux jeux de contacts en vis-à-vis,
- lesdits contacts autodénudants présentent chacun une première partie dite avant, de section transversale sensiblement en Z et fendue axialement, ou de section transversale en U et fendue latéralement entre la branche de base et les branches latérales de sa section en U, et une deuxième partie opposée et dite arrière, couplée à une queue latérale élastique et saillante d'un seul côté de la première partie, les deux queues latérales de deux contacts en place et en vis-à-vis dans l'un des modules de connexion venant en pression élastique l'une contre l'autre dans une partie centrale arrière du module de connexion, en enserrant entre elles l'une des languettes du collecteur de masse lorsque ces deux contacts sont les contacts de masse,
- la réglette comporte en outre au moins une patte d'articulation et au moins une patte de verrouillage opposée, lesdites pattes d'articulation et de verrouillage étant saillantes sur l'arrière du fond du berceau, sensiblement à l'une et l'autre de ses extrémités, respectivement, pour le maintien de la réglette sur un châssis raccordé à la masse extérieure.

La présente invention a également pour objet un ensemble de telles réglettes, constitué sur le châssis raccordé à la masse extérieure, le châssis ayant une section en U et comportant une base et deux branches, caractérisé en ce qu'il comporte une pièce d'articulation montée amovible sur le bord d'une première des branches et en ce que la deuxième branche du châssis présente des encoches de verrouillage pour lesdites réglettes.

Avantageusement en outre :
- la pièce d'articulation comporte un support allongé et plat portant d'une part des pattes de retenue, saillantes sur une première des faces du support et pourvues chacune d'une dent terminale d'accrochage, et d'autre part au moins un bras support, saillant sur la deuxième face du support et pourvu de deux doigts opposés d'articulation, lesdits doigts étant parallèles à l'axe médian dudit support, et la première branche du châssis présente des lumières le long de son propre bord, recevant les dents des différentes pattes de retenue.

Les caractéristiques et avantages de la présente invention ressortiront de la description d'un exemple de réalisation illustré dans les dessins annexés, dans lesquels:
- la figure 1 est une vue en perspective d'un ensemble de réglettes de connexion, selon l'invention, réalisé sur un châssis,
- la figure 2 est une vue en perspective du châssis,
- la figure 3 est une vue en perspective d'une pièce d'articulation des réglettes sur le châssis,
- la figure 4 est une vue partielle en élévation de la pièce d'articulation,
- les figures 5 et 6 sont une vue de côté et une vue partielle de dessous de la pièce d'articulation,
- la figure 7 est une vue de face partiellement arrachée de l'une des réglettes, illustrant cette réglette fermée sur une partie de sa longueur et par ailleurs plus ou moins partiellement équipée,
- la figure 8 est une vue en coupe longitudinale partielle de la réglette, selon la ligne VIII-VIII de la figure 7,
- la figure 9 est une vue en coupe transversale de la réglette, selon la ligne IX-IX de la figure 8,
- la figure 10 est une vue en perspective d'un collecteur de masse de la réglette,
- les figures 11 à 13 sont une vue partielle de face, une vue partielle en coupe longitudinale et une vue frontale du collecteur de masse,
- la figure 14 est une vue de face d'un module de connexion partiellement équipé, qui appartient à la réglette,
- la figure 15 est une vue de côté partiellement coupée du module de la figure 14,
- les figures 16 et 17 sont une vue de face et une vue de côté d'un contact autodénudant de la réglette ou plus précisément de l'un de ses modules,
- les figures 18 et 19 sont deux vues correspondant aux figures 14 et 15, pour une variante de réalisation du module de connexion,
- les figures 20 et 21 sont une vue en perspective et une vue en coupe transversale de l'un des contacts autodénudants du module des figures 18 et 19.

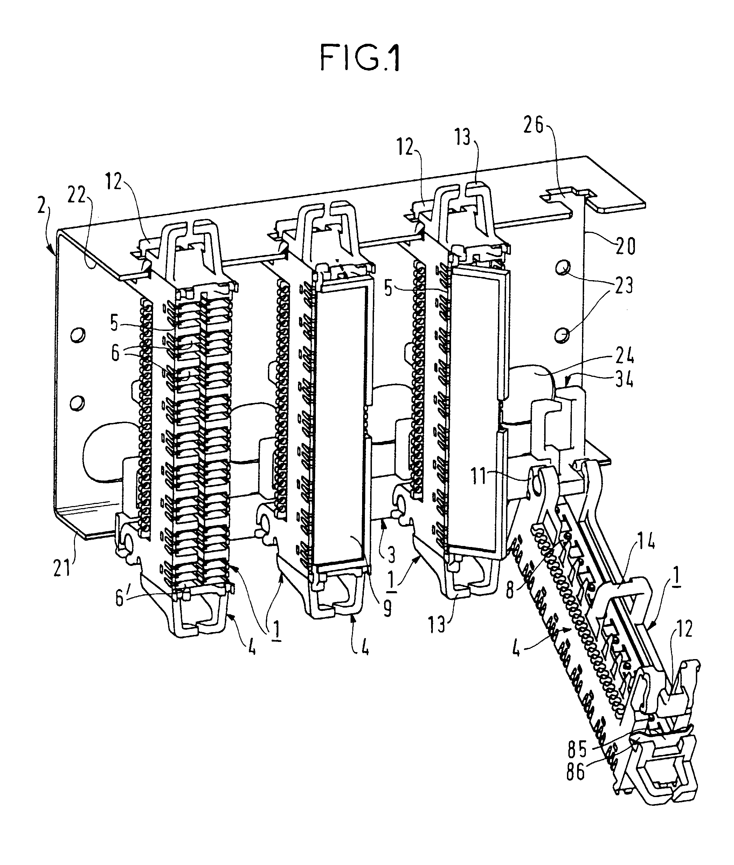

En se référant à la figure 1, on voit un ensemble de quatre réglettes de connexion 1 selon l'invention, qui est constitué par l'assemblage côte à côte de ces réglettes sur un châssis métallique 2 en forme de U. Cet ensemble est illustré vertical, les réglettes étant verticales entre les branches horizontales du châssis. Il peut être horizontal, avec les réglettes horizontales entre les branches verticales du châssis alors vertical ou horizontal. Il se monte dans un coffret ou armoire ou sur une structure support, non représenté et équipé pour la fixation du châssis dans la position souhaitée des réglettes.

Ces réglettes 1 sont individuellement articulées et verrouillées sur le châssis, pour la mise en place ou le retrait de chacune d'elles ainsi que pour la mise en position dite ouverte ou en position dite fermée de chacune sur le châssis.

Le châssis est adapté à un nombre donné de réglettes, pouvant être différent de quatre. Il peut être sous équipé. Il est raccordé à une masse extérieure.

Une pièce d'articulation 3, qui est commune aux différentes réglettes mais peut tout aussi bien être individuelle et affectée à chacune d'elles, est retenue de manière amovible sur le châssis, sur l'une de ses branches.

Dans cette figure 1, les réglettes ont été illustrées plus ou moins complètement équipées et l'une d'elles en position ouverte sur le châssis, pour une meilleure compréhension. Elles sont identiques les unes aux autres. Chacune comporte essentiellement :
- un corps isolant allongé 4, qui comporte de préférence un berceau support 5 dans lequel sont assemblés des modules de connexion 6 et un module terminal 6', ou qui peut être monobloc,
- des contacts autodénudants, non représentés pour éviter des surcharges et désignés ci-après sous la référence 7, qui affleurent sensiblement sur l'une des faces dite avant de la réglette considérée verticale en étant en deux rangées dans le corps et qui sont plus précisément montés dans les modules 6 et 6', le module 6' étant de mêmes dimensions que les modules 6 mais étant sous équipé par rapport à ces derniers,
- un collecteur de masse 8, retenu sur la face arrière du corps 4 et
- un couvercle 9, monté sur la face avant du corps isolant 4.

Chaque réglette comporte, en outre :
- une paire de pattes d'articulation 11, saillantes sur la face arrière du corps isolant, à l'une de ses extrémités, qui sont encliquetables sur la pièce d'articulation 3,
- des pattes de verrouillage 12, saillantes sur la face arrière du corps, à sa deuxième extrémité, qui se bloquent élastiquement sur le châssis 2,
- deux anneaux terminaux passe-fils 13, qui sont prévus sur l'une et l'autre des extrémités du corps isolant 4,
- au moins un anneau arrière passe-fils 14, qui est analogue à chaque anneau 13 mais est prévu saillant sur la face arrière du corps isolant 4, ici sur la partie médiane de cette face arrière.

Les réglettes en place et en position fermée sur le châssis 2 laissent un intervalle libre à l'intérieur du châssis. Cet intervalle constitue un lit pour les lignes à connecter aux réglettes.

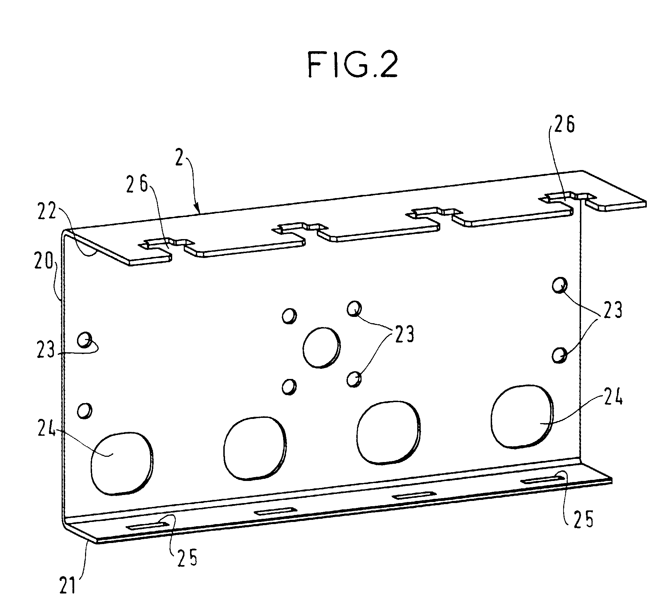

Le châssis 2 est précisé en regard de cette figure 1 ou plus particulièrement de la figure 2. Il est considéré vertical pour le montage des réglettes verticalement. Il comprend une base 20 et deux branches 21 et 22, ces branches étant horizontales dans les conditions indiquées.

La base 20 est percée de petits trous 23 pour la fixation du châssis dans une armoire ou autre à l'aide de vis et présente de gros trous 24 pour le passage de câbles ou de lignes desservant les différentes réglettes.

L'une des branches 21 présente une série de lumières rectangulaires alignées 25, qui sont dans cet exemple au nombre de quatre, sont proches du bord de cette branche et sont destinées au montage et à la retenue de la pièce d'articulation. De préférence, cette branche est celle inférieure.

L'autre branche 22 présente quatre encoches 26 de verrouillage pour les quatre réglettes. Ces encoches sont ouvertes sur le bord de la branche et sont en forme de croix. Cette branche 22 est moins saillante que la branche 21, sur la base 20.

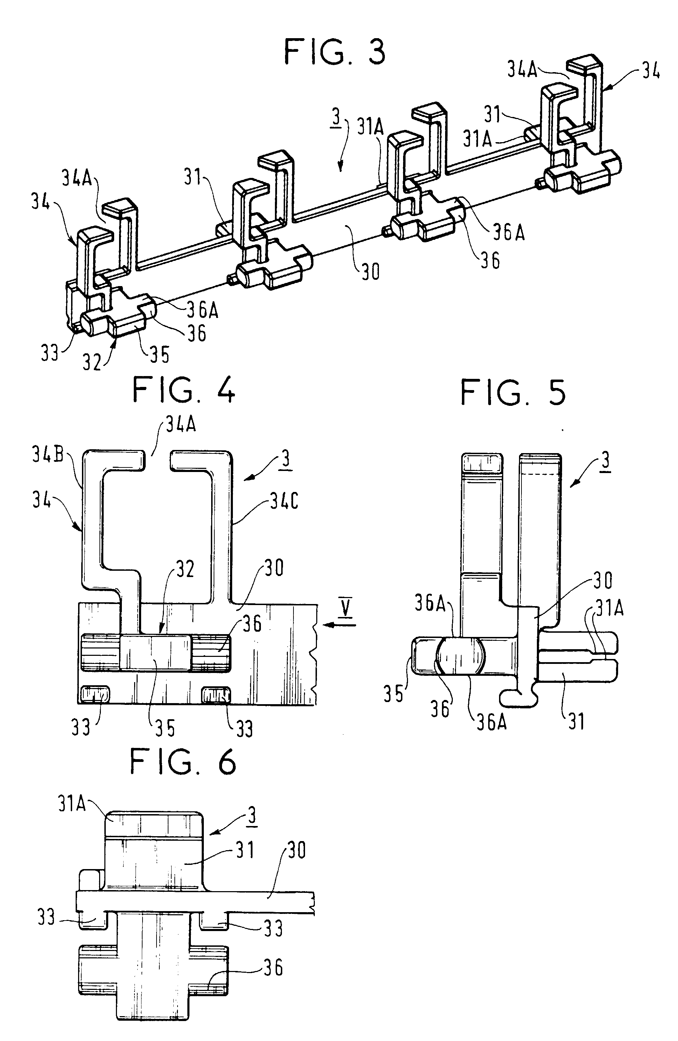

La pièce d'articulation 3 est précisée en regard de la figure 1 et plus particulièrement des figures 3 à 6. Elle est sensiblement de même longueur que le châssis.

Cette pièce comporte une pièce plate de support constituée par une barrette continue 30, qui présente une série de pattes de retenue 31, quatre jeux d'articulations 32 pour les quatre réglettes concernées, quatre jeux de butées 33 d'arrêt des réglettes en position d'ouverture et avantageusement en outre quatre anneaux passe fils 34 pour les quatre réglettes.

Les pattes de retenue 31 sont saillantes sur l'une des faces de la barrette et correspondent à la série de lumières rectangulaires dans la branche inférieure du châssis. Elles sont prévues alternativement décalées d'un côté et de l'autre de l'axe longitudinal médian de cette face, pour être reçues en alternance contre la face extérieure et la face intérieure de la branche inférieure du châssis. Chacune d'elles présente dent terminale 31A sur sa face intérieure, qui s'insère dans l'une des lumières rectangulaires de la branche inférieure du châssis.

Les jeux d'articulations 32 comportent quatre bras 35, saillants sur l'autre face de la barrette 30 le long de son axe longitudinal, sur chacun desquels sont prévus deux doigts d'articulation 36, opposés l'un à l'autre et parallèles à l'axe longitudinal de la barrette. Ils définissent le pas des réglettes sur la pièce d'articulation et sur le châssis. Les doigts d'articulation sont semi-cylindriques et présentent deux méplats 36A opposés l'un à l'autre, pour des facilités d'insertion des pattes d'articulation de chaque réglette sur ces doigts ainsi que pour leur retrait, alors que la réglette est dans une position intermédiaire entre sa position fermée et sa position ouverte sur le châssis.

Les quatre jeux de butées 33 sont constitués par des paires de petites pattes, saillantes sur la même face que les jeux d'articulations et prévues en regard de ceux-ci, le long de l'un des bords dit extérieur de la barrette 30 en place sur la branche du châssis. Chaque paire de butées 33 limite la rotation de la réglette autour de la paire de doigts d'articulation correspondante, en définissant une position d'ouverture sensiblement à 90° de celle de fermeture. Ces paires de butées sont peu saillantes sur la barrette 30, comparativement aux jeux d'articulations.

Les anneaux passe-fils 34 sont prévus chacun pour les lignes desservant l'une des réglettes. Ils sont prévus en correspondance avec les jeux d'articulation, en n'étant pas tout à fait centrés sur ceux-ci pour ne pas faire obstacle à la rotation de la réglette concernée, et sont saillants le long du bord dit intérieur de la barrette en place sur le châssis. Ils présentent une ouverture 34A sur leur côté opposé à la barrette. Ils sont définis chacun par deux demi-anneaux 34B et 34C, qui ont en commun la portion de la barrette située entre eux et les reliant et qui sont décalés l'un de l'autre en n'étant pas tout à fait en vis-à-vis.

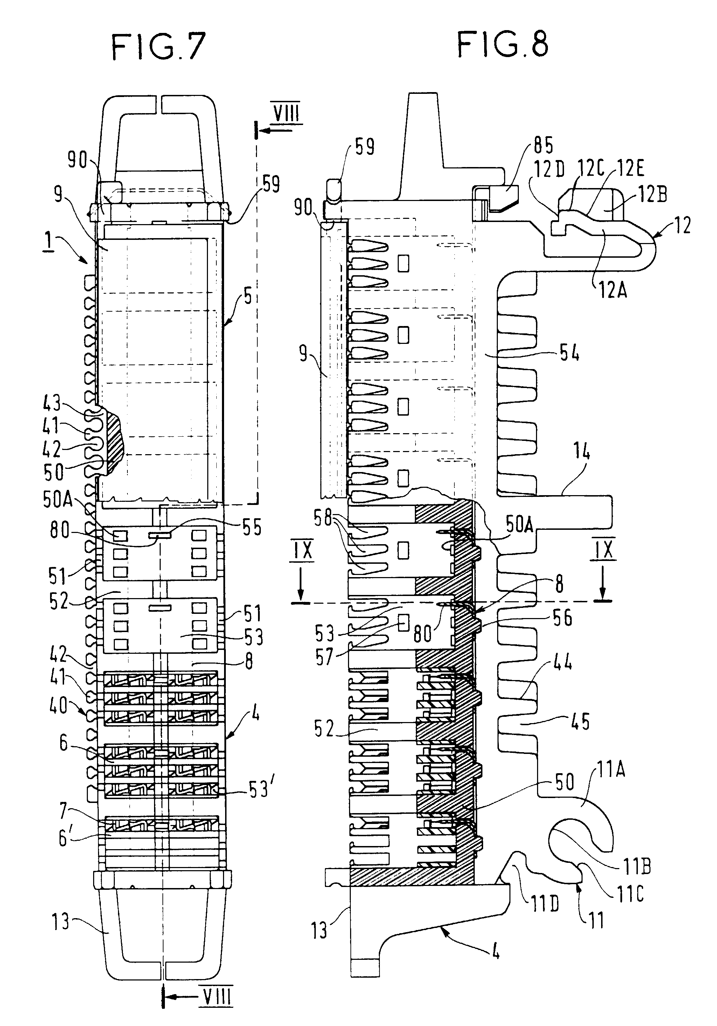

Les réglettes 1 sont également précisées en se référant à la figure 1 et plus particulièrement tout d'abord aux figures 7 à 9, en ce qui concerne le berceau 5.

Le berceau 5 est de section droite en U et constitue la partie périphérique de la réglette. Il porte les pattes d'articulation 11, les pattes de verrouillage 12, l'anneau arrière passe-fils 14 et les anneaux terminaux passe-fils 13. Il présente en outre un peigne latéral guide-fils 40, réalisé sur un seul côté ou en variante sur les deux côtés, sensiblement le long de sa partie arrière. Ce berceau est réalisé par moulage avec les différents éléments qui y sont prévus.

Ce berceau a un fond 50 et deux côtés latéraux 51. Il est compartimenté par des cloisons transversales 52, qui relient ses deux côtés et ferment ses extrémités et qui définissent entre elles des compartiments identiques 53. Les compartiments 53 autres que le compartiment terminal situé du côté de l'articulation 11 reçoivent chacun l'un des modules de connexion 6, qui sont équipés de deux jeux contacts 7, en deux rangées. Le compartiment terminal situé du côté de l'articulation 11 reçoit le module 6', dit module de masse, qui est de mêmes dimensions que les modules 6 mais ne comporte que deux contacts 7 en vis-à-vis. Les modules 6 sont alignés les uns avec les autres et avec le module terminal 6'. Leurs contacts sont alors en deux rangées. Ils viennent en appui sur des butées d'appui 50A prévues légèrement saillantes et en deux rangées sur la face intérieure du fond 50.

Le fond 50 assure la retenue du collecteur de masse 8 sur sa face extérieure. Il présente à cet effet une échancrure médiane 54 dans sa face extérieure, sensiblement sur toute sa longueur, une série de passages étroits 55, réalisés à travers son épaisseur et centrés le long de l'échancrure, et une série de petits bossages circulaires 56, qui sont centrés et saillants le long de l'échancrure. Chacun des passages 55 débouche dans l'un des compartiments 53, au voisinage de l'une des cloisons 52 le délimitant et est parallèle à cette cloison.

L'anneau arrière passe-fils 14 enjambe l'échancrure.

Le peigne 40 est saillant extérieurement le long de l'un des côtés 51, au niveau du fond 50. Il est formé par une série de dents 41 délimitant entre elles des encoches circulaires 42 à ouverture étroite pour les conducteurs individuels et l'éventuel fil d'écran des lignes desservant la réglette. Une gorge longitudinale 43 légèrement plus profonde que les encoches et ouverte en long dans ces encoches est prévue juste à l'avant du peigne.

Une série d'ailettes 44 saillantes sur l'arrière du fond est prévue du côté du peigne. Ces ailettes sont en biais sur l'épaisseur du bord correspondant de l'échancrure et définissent entre elles des passages 45 pour les lignes desservant la réglette.

Sur ce berceau 5, on prévoit une rangée d'empreinetes intérieures 57 sur chacun des côtés latéraux 51 pour la rétention des modules 6 et 6' dans les compartiments 53.

Des encoches guide fils 58 sont en outre définies dans les côtés 51, le long de leur bord, en étant organisées en jeux successifs, chacun de trois encoches, en correspondance avec les compartiments successifs le long du berceau.

Deux pattes d'articulation 59 sont en outre prévues à l'une et l'autre des deux extrémités du bord des côtés 51, pour le montage articulé du couvercle 9 sur le bord de l'un ou l'autre des deux côtés 51. Ce couvercle présente quant à lui deux doigts terminaux 90 d'axe d'articulation, qui sont prévus sur l'un de ses bords longitudinaux et sont engagés dans les pattes 59. Il est directement fermé contre le bord de l'autre côté du berceau, et peut être si souhaité verrouillé sur le bord de cet autre côté.

Les pattes d'articulation 11 de la réglette comportent chacune une tête circulaire 11A percée d'un trou circulaire 11B ayant une ouverture 11C, pour leur montage élastique sur la pièce d'articulation des réglettes. L'ouverture 11C est de largeur légèrement moindre que la distance entre les méplats prévus sur les doigts d'articulation de cette pièce. Le trou 11B est sensiblement de même diamètre que les doigts. Une gorge 11D est prévue entre chaque patte d'articulation et le fond 50, du côté de l'extrémité de la réglette, pour recevoir la butée correspondante de limitation d'ouverture de la réglette articulée sur la pièce d'articulation en place sur le châssis.

Les pattes de verrouillage 12 de la réglette sont solidaires du fond du berceau, à son autre extrémité. Elles sont repliées sensiblement sur elles-mêmes, du côté de cette extrémité, pour présenter chacune une partie terminale élastiquement déformable 12A. Elles sont reliées par un pont 12B entre les bords en vis-à-vis des parties terminales 12A. Ce pont s'étend sur une partie de la longueur des parties terminales, depuis sensiblement l'extrémité de chacune d'elles, et est saillant sur elles vers l'extrémité du berceau. Il est de largeur sensiblement égale à celle de l'ouverture des encoches de verrouillage prévues sur le châssis. Il s'encastre dans l'ouverture de l'encoche de verrouillage alors que les parties terminales 12A sont en appui à pression de part et d'autre de cette ouverture contre la face intérieure de la branche du châssis, quand la réglette arrive en position de fermeture. Il se relâche dans l'encoche de verrouillage, dès lors que les parties terminales 12A s'encastrent elles-mêmes de part et d'autre dans cette même encoche de verrouillage, en fin de mise en position de fermeture de la réglette.

Le déverrouillage de la réglette en position de fermeture est obtenu par appui sur le pont 12B, pour que les parties terminales 12A échappent à l'encoche par déformation élastique et soient libérées.

On note en outre sur ces pattes de verrouillage 12, que les portions quasi terminales de chacune forment un 5 bossage plat 12C, délimitant un épaulement à angle droit de butée 12D, entre ce bossage et l'extrémité en retrait de chaque patte, et un épaulement biais 12E de l'autre côté du bossage. Les épaulements biais 12E forcent les bossages 12C contre la face intérieure de la branche du châssis jusqu'à ce qu'ils s'insèrent dans l'encoche de verrouillage en s'opposant alors à la libre ouverture de la réglette.

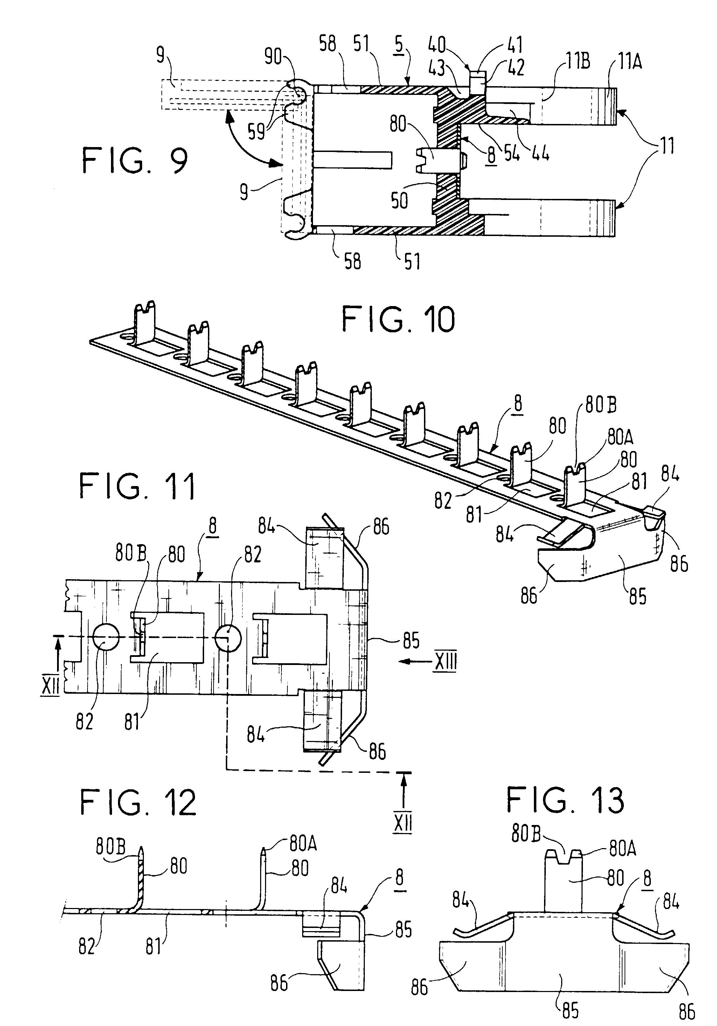

Le collecteur de masse 8 est décrit en se référant plus particulièrement aux figures 10 à 13, ou aux figures 8 et 9 pour son montage sur le berceau 5 et à la figure 1 ou 2 pour sa liaison électrique avec le châssis.

Le collecteur de masse 8 est une barrette métallique qui est reçue dans l'échancrure 54 sur l'arrière du fond 50 du berceau et qui présente une série de languettes 80 saillantes sur l'une de ses faces. Ces languettes résultent de crevages axiaux 81 réalisés à la suite le long de la barrette et pliés à angle droit sur elle. Elles correspondent aux passages étroits 55 à travers le fond du berceau dans lesquels elles sont insérées pour s'étendre chacune dans l'un des compartiments du berceau.

Il présente aussi une série de trous circulaires 82, réalisés de manière alternée avec les crevages 81. Les trous 82 reçoivent les bossages circulaires saillants sur l'arrière du fond, pour la tenue en place du collecteur de masse sur le fond. Les bossages circulaires dans les trous 82 peuvent être partiellement fondus pour renforcer la tenue du collecteur de masse. L'extrémité 80A des languettes est chanfreinée, de préférence sur les deux faces des languettes et présente une petite encoche médiane 80B formant un point de réception d'une fiche de test insérée depuis la face avant de la réglette.

La partie terminale du collecteur de masse, qui est reçue sur l'extrémité articulée de la réglette, assure le contact avec le châssis. Elle présente deux pattes latérales arquées 84 de pression élastique sur le bord de la branche 22 du châssis ayant les encoches du verrouillage, ainsi qu'une patte terminale 85 pliée en sens inverse des languettes 80. Cette patte terminale 85 présente elle-même deux griffes latérales 86, repliées sur la patte 85, par un pliage intérieur à 120° sensiblement. Ces deux griffes s'ancrent légèrement dans la face extérieure de la branche du châssis, de part et d'autre de l'encoche correspondante de verrouillage de la réglette concernée, pour un bon contact électrique avec le châssis qui est en particulier en aluminium.

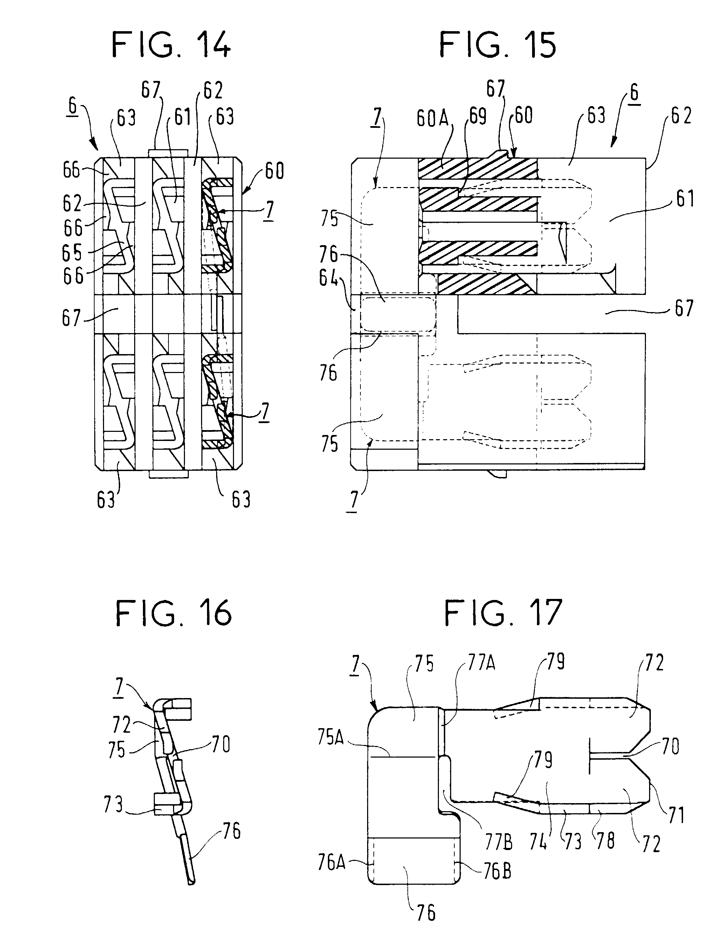

L'un des modules 6 est précisé en se référant plus particulièrement aux figures 14 et 15 et l'un des contacts autodénudants 7 en regard plus particulièrement des figures 16 et 17.

Le module 6 comporte un corps isolant dit bloc 60, de forme parallélépipédique, qui est d'un seul tenant ou peut être en plusieurs parties assemblables, et deux jeux de contacts 7 en deux rangées dans le bloc. Chaque jeu de contacts comporte trois contacts en vis-à-vis dans cet exemple, pour le raccordement d'une ligne ou d'une jarretière comprenant chacune une paire de conducteurs et un éventuel fil d'écran. Deux des contacts en vis-à-vis ont simplement été illustrés dans le module de la figure 14, pour éviter les surcharges et permettre une meilleure compréhension, leur partie avant été représentée en coupe transversale pour une meilleure distinction. On précise en outre que l'un des couples terminaux de contacts en vis-à-vis constitue le couple de contacts de masse.

Le bloc 60 comporte deux séries de trois logements 61 en vis-à-vis d'une série à l'autre, pour les couples de contacts 7. Ces logements sont délimités les uns des autres par des parois ou cloisons 62. Chaque logement est ouvert sur une face avant et la face opposée arrière du bloc.

Il est également ouvert latéralement, sur l'une et l'autre des deux faces latérales opposées le long de la série de logements, dans la partie avant du bloc, pour définir une entrée 63 du conducteur ou du fil d'écran à raccorder au contact en place. Chaque logement 61 est en outre ouvert directement dans celui en vis-à-vis de l'autre série, dans la partie centrale arrière du bloc, pour définir une fenêtre commune 64 dans laquelle les deux contacts en place dans ces deux logements sont reliés élastiquement l'un à l'autre. Entre les parties avant et arrière du bloc, la partie intermédiaire 60A de celui-ci présente deux séries de fentes 65. Chaque fente 65 appartient à l'un des logements et est de forme adaptée à celle du contact pour le positionnement et le maintien du contact dans le logement. Sur la partie avant du bloc, des bossages déflecteurs 66 sont prévus sur l'une des parties terminales de l'une des parois 62 et l'autre partie terminale de l'autre paroi 62 délimitant chaque logement et sont saillants dans le logement, pour le maintien en biais du contact dans ce logement.

Le bloc 60 présente en outre une série de puits de coupure 67 entre les deux séries de logements. Chaque puits est ouvert sur la face avant du bloc et débouche dans la fenêtre centrale arrière 64 de communication des deux logements en vis-à-vis et de part et d'autre de ce puits.

Il comporte aussi deux ergots saillants 67, centrés sur les deux faces latérales le long des deux séries de logements, pour le maintien du module dans le berceau par réception de ses ergots dans les deux empreintes latérales intérieures correspondantes 57 (figure 8). Il comporte en outre deux échancrures 69 dans sa partie intermédiaire dans chaque côté intérieur de la fente en Z 65 pour la rétention du contact autodénudant en place sans son logement.

En correspondance avec ce module 6, on indique que le module de masse 6' ne comporte que deux contacts autodénudants en vis-à-vis tels que les deux terminaux illustrés en place dans le module 6.

On indique aussi que le module 6 peut être constitué de deux parties assemblables l'une à l'autre, qui comportent alors chacune trois contacts autodénudants et sont assemblées le long de la série de puits de coupure, alors partiellement défini sur chaque partie. En variante le module 6 peut être défini en trois parties, qui comportent alors chacune deux contacts en vis-à-vis et sont assemblées les unes à la suite des autres.

Les contacts autodénudants sont tous identiques et constitués chacun par une petite pièce métallique fendue axialement sur une partie de sa longueur, découpée et convenablement pliée. Ils sont entièrement reçus dans les logements du corps isolant du module, en étant légèrement en retrait par rapport aux faces avant et arrière du bloc.

Chaque contact 7 comporte une fente autodénudante axiale 70 dans sa partie avant, à entrée en Vé sur son extrémité avant 71. Il présente deux bras 72 d'un côté et de l'autre de cette fente, qui sont pliés parallèlement à la fente 70 dans un sens et l'autre pour former deux ailettes 73, en donnant au contact une section transversale dite en Z, droit ou inversé, dans sa partie avant le long de la fente et légèrement au delà dans une partie intermédiaire 74 du contact.

Au delà de cette partie intermédiaire, le contact comporte une partie dite arrière 75 à queue latérale élastique 76, saillante d'un seul côté du contact pour sa liaison électrique à pression avec un autre contact en vis-à-vis. Cette queue latérale forme un ressort plat ou en variante légèrement arqué. Elle est d'épaisseur légèrement réduite et a ses deux bords opposés 76A chanfreinés.

La partie arrière 75 est couplée par une zone latérale 77A déformée par pliage ou autre sur la seule des deux moitiés en largeur de la partie intermédiaire 74, qui est la plus éloignée de la queue élastique 76, en étant rendue le long de cette zone 77A sensiblement transversale aux aillettes 73. Elle est par contre séparée de la partie intermédiaire, sur l'autre moitié de la largeur de celle-ci, par une fente 77B, et présente un pliage intermédiaire 75A, parallèle et sensiblement opposé à la fente autodénudante 70. Le long de cette fente de séparation 77B, elle est sensiblement parallèle à la partie intermédiaire 74 et aux bras 72, en l'absence de toute contrainte élastique exercée sur la queue 76, en étant déformable et donnant une importante élasticité à la queue de liaison 76, pour sa liaison à la queue de liaison du contact en vis-à-vis dans le module, ainsi que montré dans la figure 14.

En regard de la figure 14 ou 15 et de la figure 8, on comprend aisément en outre que cette élasticité des queues de liaison 76 de deux contacts en vis-à-vis permet également leur insertion en pression de part et d'autre de la languette du collecteur de masse qui est saillante dans le compartiment, pour la liaison de cette languette aux deux contacts de masse du module 6 ou 6' en place dans son compartiment.

Sur chaque ailette 73 du contact 7 sont prévues une échancrure terminale avant 78, qui réduit la largeur de l'ailette et reçoit un conducteur ou le fil d'écran venant se raccorder dans la fente autodénudante, et une patte terminale arrière 79 qui assure le blocage du contact dans le bloc isolant du module. Ce blocage du contact se fait dans le fond de l'échancrure 69 du bloc, sur chaque côté de la fente en Z 65, (figures 14 et 15) et par ailleurs contre l'une des butées 50A prévues sur le fond du berceau 5 (figure 8).

Ces modules conçus pour retenir les contacts 7 en biais le long de chaque rangée dans leurs logements et ces contacts de petites dimensions et dits en Z dans leur partie avant permettent un montage à pas réduit des contacts dans chaque module 6 et donc dans chaque jeu le long des deux rangées de contacts de la réglette. On précise à titre d'exemple préférentiel que le pas réduit des contacts dans chaque jeu est de 2,54 mm et que le pas de deux contacts d'un jeu au suivant est de l'ordre de 5 mm, alors que le pas de montage des contacts le long des rangées dans les réglettes connues, qui est couramment adopté jusqu'ici, est de l'ordre de 5 mm.

La réglette résultante est donc de dimensions restant réduites, tout en assurant une protection des lignes les unes relativement aux autres pour limiter la diaphonie entre les lignes raccordées, que ces lignes soient écrantées ou non. Lorsque les lignes sont écrantées individuellement, leur fil d'écran est directement raccordé au contact de masse correspondant de chaque jeu. Le module terminal de masse est quant à lui destiné au raccordement sur ses contacts de masse du fil d'écran du câble écranté multiligne qui dessert la réglette.

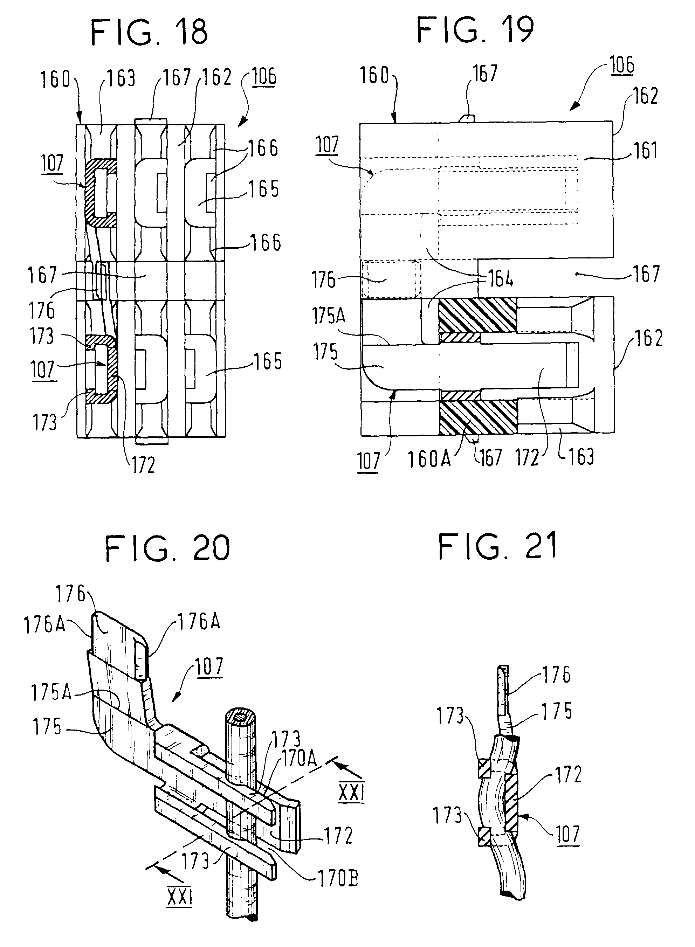

Dans les figures 18 et 19, on a illustré une variante de réalisation donnée par rapport aux modules 6 ou 6' de la réglette, les modules selon cette variante se substituant aux modules 6 ou 6' et étant désignés chacun sous la référence globale 106.

Les différences par rapport aux modules précédents résultent de la forme et du mode de montage de leurs contacts autodénudants 107, qui sont décrits plus particulièrement en regard des figures 20 et 21.

Le module 106 comporte un corps ou bloc isolant 160 analogue à celui du module 6 et sur lequel on a simplement identifié les parties correspondantes par des références identiques aux précédentes, au chiffre de la centaine près qui a été ajouté. Les différences sont précisées.

Les fentes 165 dans la partie intermédiaire 160A du corps isolant sont de section en U, dont la base est délimitée contre l'une des parois du compartiment 161 concerné et dont les branches sont perpendiculaires à cette paroi et s'étendent jusqu'à l'autre paroi. Les bossages déflecteurs 166, prévus saillants dans la partie avant du compartiment, sont rectilignes et sont pour deux d'entre eux situés en vis-à-vis de part et d'autre de l'entrée 163 de conducteur, pour deux autres également en vis-à-vis sur l'extrémité opposée du compartiment, et pour le dernier sur la portion médiane de la paroi opposée à la base du U de la fente 165.

Le contact autodénudant 107 présente une partie avant et une partie intermédiaire qui sont de section droite en U. Il comporte deux fentes autodénudantes latérales 170A et 170B à entrée avant en Vé. Ces fentes autodénudantes sont prévues entre la branche de base 172 et l'une et l'autre des branches latérales 173. Elles s'étendent depuis l'extrémité avant, le long de la partie avant et sensiblement à mi-longueur de la partie intermédiaire, en séparant la branche de base de chacune des branches latérales et en présentant chacune deux arêtes internes d'ancrage dans le conducteur inséré dans les deux fentes autodénudantes, ainsi que représenté dans la figure 21.

Ce contact 107 présente également une partie arrière 175 qui prolonge la branche de base 172, présente un pliage 175A sensiblement aligné avec l'une des fentes autodénudantes et définit au-delà une queue latérale élastique et saillante 176, pour la liaison de ce contact à celui en vis-à-vis dans le module 106. Cette queue élastique est d'épaisseur réduite et présente des bords 176A chanfreinés.

Ces contacts montés dans les différentes compartiments du module sont perpendiculaires à chaque rangée définie dans ce module et dans la réglette résultante. Les avantages obtenus sont ceux indiqués précédemment en regard des contacts 7, des modules 6 ou 6' et de la réglette résultante.

## Revendications

1. Réglette de connexion de lignes à haut débit, comportant un corps isolant allongé et deux rangées de contacts autodénudants montés dans le corps en étant en vis-à-vis et reliés électriquement deux à deux, d'une rangée à l'autre, et en définissant des jeux successifs le long de chaque rangée, les contacts de chaque jeu de l'une des rangées étant affectés d'une part à l'une des lignes et d'autre part à la constitution d'au moins un écran de masse terminal dans le jeu, caractérisée en ce qu'elle comporte, dans chaque jeu de contacts (7, 107) un seul des deux contacts terminaux affecté à la constitution d'un seul écran de masse et dit contact de masse et un collecteur de masse (8) retenu le long dudit corps (4), relié à une masse extérieure et pourvu de languettes (80) de liaison électrique aux contacts de masse en vis-à-vis des deux rangées, à l'intérieur dudit corps (4).

2. Réglette selon la revendication 1, caractérisée en ce que lesdits contacts autodénudants (7, 107) montés dans le corps (4) présentent un premier pas entre eux dans chaque jeu et un deuxième pas, supérieur au premier, de l'un des jeux au suivant dans chaque rangée.

3. Réglette selon la revendication 2, caractérisée en ce que lesdits contacts autodénudants (7, 107) sont montés le long de chaque rangée, avec un premier pas ayant une valeur donnée et comprise sensiblement entre 2,5 à 5 mm et un deuxième pas de valeur de l'ordre de 5 mm.

4. Réglette selon l'une des revendications 2 et 3, caractérisée en ce que ledit corps isolant (4) comporte un berceau allongé (5) de section droite en U, présentant un fond (50) et deux côtés latéraux (51), dans lequel sont assemblés des modules de connexion (6, 106) formés chacun d'un bloc isolant (60, 160) parallélépipédique équipé de deux jeux de contacts (7, 107) en vis-à-vis.

5. Réglette selon la revendication 4, caractérisée en ce que ledit berceau présente une série de cloisons transversales (52), le divisant en compartiments (53) et séparant les uns des autres lesdits modules de connexion (6, 106) assemblés dans le berceau.

6. Réglette selon la revendication 5, caractérisée en ce que chaque bloc isolant (60, 160) comporte deux séries de logements intérieurs (61, 161), en vis-à-vis d'une série à l'autre, pour les contacts (7, 107) en vis-à-vis de deux jeux, lesdits logements étant ouverts d'une part sur deux premières faces opposées dites avant et arrière du bloc, d'autre part par une entrée (63, 163) sur une partie avant de deux deuxièmes faces opposées dites latérales du bloc et en outre chacun dans le logement en vis-à-vis de l'autre série par une fenêtre commune (64, 164) prévue dans une partie centrale arrière dudit bloc, dans laquelle deux contacts en vis-à-vis sont reliés électriquement l'un à l'autre et sont reliés à l'une des languettes (80) du collecteur de masse (8) lorsque ces deux contacts sont des contacts de masse des deux jeux.

7. Réglette selon la revendication 6, caractérisée en ce que chaque bloc isolant (60, 160) comporte en outre une série de puits de coupure (67, 167), prévus entre les logements en vis-à-vis des deux séries, lesdits puits débouchant chacun sur la face avant et dans l'une des fenêtres (64, 164) de la partie centrale arrière dudit bloc.

8. Réglette selon la revendication 7, caractérisée en ce que le bloc (60, 160) est constitué d'au moins deux parties assemblables et équipées chacune de l'un des deux jeux de contacts ou de deux contacts en vis-à-vis de l'un et de l'autre des deux jeux.

9. Réglette selon la revendication 7, caractérisée en ce qu'elle comporte en outre un module de masse (6') monté dans l'une des deux extrémités du berceau (5), analogue aux modules de connexion et équipé uniquement de deux contacts autodénudants en vis-à-vis.

10. Réglette selon l'une des revendications 6 et 9 caractérisée en ce que lesdits contacts autodénudants (7) comportent chacun une première partie dite avant de section transversale sensiblement en Z, fendue axialement et reçue en biais sur la rangée de contacts dans une partie avant des compartiments (61) de chaque module (6), et une deuxième partie opposée et dite arrière (75), couplée à une queue latérale (76) élastique et saillante d'un seul côté de la première partie, les deux queues latérales de deux contacts en place dans les logements (61) en vis-à-vis venant en pression élastique l'une contre l'autre dans la partie centrale arrière de chaque module de connexion (6), en enserrant entre elles l'une des languettes (80) du collecteur de masse (8) lorsque ces deux contacts sont des contacts de masse.

11. Réglette selon la revendication 10, caractérisée en ce que lesdits contacts (7) comportent une fente d'élasticité (77B) pour ladite queue latérale, s'étendant depuis ladite queue latérale entre la partie arrière et une partie intermédiaire non fendue (74) dudit contact.

12. Réglette selon l'une des revendications 6 et 9, caractérisée en ce que lesdits contacts autodénudants (107) comportent chacune une partie avant de section transversale en U, définissant une branche de base et deux branches latérales et s'étendant perpendiculairement à la rangée de contacts, dans une partie avant dudit module (106), et une partie arrière (175) couplée à la branche de base et à une queue latérale élastique (176) saillante d'un seul côté dudit contact, pour sa liaison élastique à la queue du contact en vis-à-vis dans le module, et comportent deux fentes autodénudantes (170A, 170B) entre ladite branche de base et l'une et l'autre desdites branches latérales de ladite partie avant.

13. Réglette selon l'une des revendications 5, 10 et 12 caractérisée en ce que ledit collecteur de masse (8) est une barrette métallique, reçue et retenue longitudinalement sur l'arrière du fond (50) dudit berceau (5), dont lesdites languettes (80) sont saillantes sur l'une de ses faces et reçues dans la partie centrale arrière des différents modules (6, 6') en place dans le berceau (5), à travers des passages (55) prévus en correspondance dans le fond (50) du berceau (5), et dont au moins une première de ses extrémités est reliée à un châssis (2) raccordé à la masse extérieure.

14. Réglette selon la revendication 13, caractérisée en ce que ledit collecteur de masse (8) comporte deux pattes latérales arquées (84) sur la première de ses extrémités une patte terminale (85) pliée sur cette première extrémité, en regard de l'autre face de la barrette, et deux griffes latérales (86) repliées sur la patte terminale (85) vers la barrette de liaison électrique dudit collecteur de masse à un châssis métallique mis à ladite masse extérieure.

15. Réglette selon l'une des revendications 13 et 14, caractérisée en ce qu'elle comporte en outre une au moins une patte d'articulation (11) et au moins une patte de verrouillage opposée (12), lesdites pattes d'articulation et de verrouillage étant saillantes sur l'arrière du fond (50) du berceau, sensiblement à l'une et l'autre de ses extrémités, respectivement, pour le maintien de la réglette sur le châssis (2).

16. Réglette selon la revendication 15, caractérisée en ce qu'elle comporte deux pattes de verrouillage (12), prévues côte-à-côte et solidaires d'une première des extrémités du fond (50) du berceau (5), présentant chacune une partie terminale élastique (12A) et portant un pont intermédiaire (12B) saillant extérieurement sur les parties terminales desdites pattes de verrouillage et relié à leurs bords en vis-à-vis.

17. Réglette selon l'une des revendications 13 à 16, caractérisée en ce que ledit berceau (5) comporte extérieurement au moins un élément de guidage, constitué parmi un anneau arrière passe fils (14), une série d'ailettes arrière guide lignes (44), un peigne latéral guide fils (40), une série d'encoches avant guide fils (58) et au moins un anneau terminal passe fils (13).

18. Réglette selon la revendication 17, caractérisée en ce qu'elle comporte un couvercle (9) articulé autour du bord de l'un des côtés (51) du berceau (5).

19. Ensemble de réglettes, comportant plusieurs réglettes selon la revendication 15 sur ledit châssis, le châssis ayant une section en U et comportant une base et deux branches, caractérisé en ce qu'il comporte une pièce d'articulation (3) montée amovible sur le bord d'une première (21) des branches du châssis et en ce que la deuxième branche (22) du châssis présente des encoches de verrouillage (26) pour lesdites réglettes (1).

20. Ensemble selon la revendication 19, caractérisée en ce que lesdites encoches de verrouillage ont une forme de croix.

21. Ensemble selon la revendication 19, caractérisé en ce que ladite pièce d'articulation (3) comporte un support allongé et plat (30) portant d'une part des pattes de retenue (31), saillantes sur une première des faces du support et pourvues chacune d'une dent terminale d'accrochage (31A), et d'autre part au moins un bras support (35), saillant sur la deuxième face du support et pourvu de deux doigts opposés d'articulation (36), lesdits doigts étant parallèles à l'axe médian dudit support, et en ce que la première branche (21) du châssis présente des lumières (25) le long de son propre bord, recevant les dents des différentes pattes de retenue (31).

22. Ensemble selon la revendication 21, caractérisé en ce que lesdits doigts d'articulation (36) présentent deux méplats opposés (36A) sur leur périphérie.

23. Ensemble selon la revendication 20, caractérisé en ce que lesdites pattes de retenue (31) sont décalées alternativement d'un côté et de l'autre de l'axe médian dudit support (30), la dent terminale sur chacune d'elles étant tournée vers cet axe médian.

24. Ensemble selon la revendication 20, caractérisé en ce que ladite pièce d'articulation (3) comporte en outre des butées (33), saillantes sur ladite deuxième face dudit support (30) et prévues sensiblement le long du bord extérieur du support (30) considéré en place sur ladite première branche du châssis, en étant en regard des doigts d'articulation (36) de chaque réglette (1), pour limiter l'ouverture de la réglette correspondante sur le châssis.

25. Ensemble selon la revendication 20, caractérisé en ce que ladite pièce d'articulation (3) comporte au moins un anneau intérieur passe fils (34), saillant latéralement et formé sur le bord intérieur du support (30) considéré en place sur ledit châssis.

## Claims

1. A connection strip for high data rate lines, the connection strip including an elongate insulating body and two rows of insulation-displacement contacts mounted in the body so that they face one another, are interconnected electrically in pairs from one row to the other, and define successive sets along each row, the contacts of each set in one of the rows being assigned to one of the lines and to constituting at least one end grounding screen in the set, said connection strip being characterized in that, in each set of contacts (7, 107), it includes a single one of the two end contacts assigned to constituting a single grounding screen referred to as a grounding contact, and a grounding collector (8) retained along said body (4), connected to an external ground, and provided with tongues (80) for making electrical connection with the facing grounding contacts in the two rows, inside said body (4).

2. A connection strip according to claim 1, characterized in that said insulation-displacement contacts (7, 107) mounted in the body (4) have a first pitch between them in each set, and a second pitch, that is greater than the first pitch, from one of the sets to the next in each row.

3. A connection strip according to claim 2, characterized in that said insulation-displacement contacts (7, 107) are mounted along each row, with a first pitch having a given value lying substantially in the range 2.5 mm to 5 mm, and a second pitch having a value of about 5 mm.

4. A connection strip according to claim 2 or 3, characterized in that said insulating body (4) comprises an elongate channel-section cradle (5) having a web (50) and two side flanges (51), and receiving connection modules (6, 106), each module being formed of a rectangular insulating block (60, 160) equipped with two sets of facing contacts (7, 107).

5. A connection strip according to claim 4, characterized in that said cradle is provided with a series of transverse partitions (52) dividing it up into compartments (53), and separating said connection modules (6, 106) from one another when they are installed in the cradle.

6. A connection strip according to claim 5, characterized in that each insulating block (60, 160) is provided with two series of internal recesses (61, 161), facing one another from one series to the other, for the facing contacts (7, 107) of two sets, said recesses being open firstly over respective "front" and "rear" opposite first faces of the block, and secondly via respective inlets (63, 163) in front portions of respective "side" opposite second faces of the block, each recess further opening out in the facing recess of the other series via a common window (64, 164) provided in the rear central portion of said block, in which portion two facing contacts are electrically connected to each other and are connected to one of the tongues (80) on the grounding collector (8) when the two contacts are grounding contacts of the two sets.

7. A connection strip according to claim 6, characterized in that each insulating block (60, 160) is further provided with a series of interrupting wells (67, 167) provided between the facing recesses of the two series, each of said wells opening out in the front face and the in one of the windows (64, 164) of the rear central portion of said block.

8. A connection strip according to claim 7, characterized in that the block (60, 160) is constituted by at least two portions that are assemblable together, each of which is provided with one of the two sets of contacts or with two facing contacts of the two sets.

9. A connection strip according to claim 7, characterized in that it further includes a grounding module (6') mounted in one of the two ends of the cradle (5), the grounding module being analogous to the connection modules, and being provided with two facing insulation-displacement contacts only.

10. A connection strip according to claim 6 or 9, characterized in that each of said insulation-displacement contacts (7) includes an axially-split "front" first portion of substantially Z-shaped cross-section, received so that it slants relative to the row of contacts in a front portion of the compartments (61) in each module (6), and an opposite "rear" second portion (75) coupled to a resilient side tail (76) projecting from one side of the first portion only, the two side tails of two contacts in place in the facing recesses (61) bearing resiliently against each other in the rear central portion of each connection module (6), while clamping one of the tongues (80) of the grounding collector (8) between them when the two contacts are grounding contacts.

11. A connection strip according to claim 10, characterized in that said contacts (7) are provided with a resilience-imparting slot (77B) for said side tail, which slot extends from said side tail between the rear portion and a non-split intermediate portion (74) of said contact.

12. A connection strip according to any one of claims 6 to 9, characterized in that each of said insulation-displacement contacts (107) includes a channel-section front portion defining a web and two side flanges, and extending perpendicularly to the row of contacts, in a front portion of said module (106), and a rear portion (175) coupled to the web and to a resilient side tail (176) projecting from one side of said contact only, so that it can be resiliently connected to the tail of the facing contact in the module, and each of said insulation-displacement contacts includes two insulation-displacement slots (170A, 170B) between said web and respective ones of the side flanges of said front portion.

13. A connection strip according to any one of claims 5, 10, and 12, characterized in that said grounding collector (8) is a metal bar received and retained longitudinally on the rear of the web (50) of said cradle (5), the tongues (80) on the collector projecting from one of its faces and being received in the rear central portions of the various modules (6, 6') in place in the cradle (5), via orifices (55) provided in corresponding positions in the web (50) of the cradle (5), and the collector having at least one of its ends connected to a frame (2) connected to the external ground.

14. A connection strip according to claim 13, characterized in that said grounding collector (8) includes two curved side tabs (84) on the first one of its ends, an end tab (85) folded over at the first end, to face the other face of the bar, and two side lugs (86) folded back on the end tab (85) towards the bar for electrically connecting said grounding connector to a metal frame connected to said external ground.

15. A connection strip according to claim 13 or 14, characterized in that it further includes at least one hinge bracket (11) and at least one opposite locking catch (12), said hinge bracket and said locking catch projecting from the rear of the web (50) of the cradle, substantially at respective ones of its ends, so as to hold the connection strip in the frame (2).

16. A connection strip according to claim 15, characterized in that it includes two locking catches (12) provided side-by-side and secured to a first one of the ends of the web (50) of the cradle (5), each catch having a resilient end portion (12A), both catches carrying a common intermediate bridge (12B) projecting outwardly from the end portions of said locking catches and connected to their facing edges.

17. A connection strip according to any one of claims 13 to 16, characterized in that said cradle (5) is outwardly provided with at least one guide element constituted from among a wire-receiving rear ring (14), a rear series of line-guiding rear fins (44), a wire-guiding side comb (40), a front series of wire-guiding notches (58), and at least one wire-receiving end ring (13).

18. A connection strip according to claim 17, characterized in that it includes a cover (9) hinged about the edge of one of the side flanges (51) of the cradle (5).

19. A connection strip assembly comprising a plurality of connection strips according to claim 15 on said frame, the frame being a channel-section frame and comprising a web and two flanges, said assembly being characterized in that it includes a hinge part (3) removably mounted on the edge of a first one (21) of the flanges of the frame, and in that the second flange (22) of the frame is provided with locking notches (26) for said connection strips (1).

20. An assembly according to claim 19, characterized in that said locking notches are cross-shaped.

21. An assembly according to claim 19, characterized in that said hinge part (3) includes a flat elongate support (30) carrying retaining catches (31) projecting from a first one of the faces of the support, each of which catches is provided with a fastening end tooth (31A), the flat elongate support also carrying at least one support arm (35) projecting from the second face of the support and provided with two opposite hinge fingers (36), said fingers being parallel to the middle axis of said support, and in that the first flange (21) of the frame is provided with slots (25) along its own edge for receiving the teeth of the various retaining catches (31).

22. An assembly according to claim 21, characterized in that said hinge fingers (36) have two opposite flats (36A) on their peripheries.

23. An assembly according to claim 20, characterized in that said retaining catches (31) are offset in alternation on one side and on the other of the middle axis of said support (30), the end tooth on each of them facing towards the middle axis.

24. An assembly according to claim 20, characterized in that said hinge part (3) further includes abutments (33) projecting from said second face of said support (30), and provided substantially along the outer edge of the support (30) as installed on said first flange of the frame, so that they face the hinge fingers (36) of each connection strip (1) so as to limit opening of the corresponding connection strip on the frame.

25. An assembly according to claim 20, characterized in that said hinge part (3) includes at least one wire-receiving inner ring (34) projecting laterally and formed on the inner edge of the support (30) as installed on said frame.

## Patentansprüche

1. Verbindungsleiste für Leitungen mit hoher Rate, die einen länglichen isolierenden Körper und zwei Reihen von Schneidkontakten umfaßt, die in dem Körper einander zugewandt und paarweise von einer Reihe zur anderen elektrisch miteinander verbunden montiert sind und dabei entlang jeder Reihe aufeinanderfolgende Sätze definieren, wobei die Kontakte jedes Satzes einer der Reihen einerseits einer der Leitungen und andererseits der Bildung einer endständigen Masseabschirmung in dem Satz zugeordnet sind, dadurch gekennzeichnet, daß sie in jedem Satz von Kontakten (7, 107) einen einzigen der zwei endständigen Kontakte umfaßt, der der Bildung einer einzigen Masseabschirmung zugeordnet ist und als Massekontakt bezeichnet wird, und einen entlang des Körpers (4) gehaltenen Massesammler (8) umfaßt, der mit einer äußeren Masse verbunden ist und mit Laschen (80) zur elektrischen Verbindung mit den zugewandten Massekontakten der zwei Reihen innerhalb des Körpers (4) versehen ist.

2. Leiste nach Anspruch 1, dadurch gekennzeichnet, daß die in dem Körper (4) montierten Schneidkontakte (7, 107) einen ersten Abstand zueinander in jedem Satz und einen zweiten Abstand, der größer als der erste ist, von einem der Sätze zum nächsten in jeder Reihe aufweisen.

3. Leiste nach Anspruch 2, dadurch gekennzeichnet, daß die Schneidkontakte (7, 107) entlang jeder Reihe mit einem ersten Abstand, der einen gegebenen Wert hat und im wesentlichen zwischen 2,5 und 5 mm liegt, und einem zweiten Abstand mit einem Wert in der Größenordnung von 5 mm montiert sind.

4. Leiste nach einem der Ansprüche 2 und 3, dadurch gekennzeichnet, daß der isolierende Körper (4) eine längliche Halterung (5) mit U-förmigem Querschnitt umfaßt, die einen Boden (50) und zwei Seiten (51) aufweist, in der Verbindungsmodule 6, 106) zusammengesetzt sind, die jeweils aus einem quaderförmigen isolierenden Block (60, 160) gebildet sind, der mit zwei Sätzen von zugewandten Kontakten (7, 107) ausgestattet ist.

5. Leiste nach Anspruch 4, dadurch gekennzeichnet, daß die Halterung eine Serie von transversalen Trennwänden (52) aufweist, die sie in Ka=ern (53) unterteilen und die in der Halterung zusammengesetzten Verbindungsmodule 6, 106) voneinander trennen.

6. Leiste nach Anspruch 5, dadurch gekennzeichnet, daß jeder isolierende Block (60, 160) zwei Serien von inneren Aussparungen (61, 161) umfaßt, wobei eine Serie der anderen zugewandt ist, für die einander zugewandten Kontakte (7, 107) zweier Sätze, wobei die Aussparungen einerseits an zwei gegenüberliegenden Flächen, als Vorder- und Rückfläche bezeichnet, des Blocks und andererseits über einen Eingang (63, 163) an einem vorderen Bereich zweier gegenüberliegender Flächen, als Seitenflächen bezeichnet, des Blocks und jeweils in die zugewandte Aussparung der anderen Serie durch ein gemeinsames Fenster (64, 164) offen sind, das in einem zentralen hinteren Bereich des Blocks vorgesehen ist, in dem zwei zugewandte Kontakte elektrisch miteinander verbunden sind und mit einer der Laschen (80) des Massesammlers (8) verbunden sind, wenn die zwei Kontakte Massekontakte der zwei Sätze sind.

7. Leiste nach Anspruch 6, dadurch gekennzeichnet, daß jeder isolierende Block (60, 160) ferner eine Serie von Trennschächten (67, 167) umfaßt, die zwischen den zugewandten Aussparungen der zwei Serien vorgesehen sind, wobei die Schächte jeweils an der Vorderfläche und in eines der Fenster (64, 164) des hinteren zentralen Bereichs des Blocks münden.

8. Leiste nach Anspruch 7, dadurch gekennzeichnet, daß der Block (60, 160) aus wenigstens zwei zusa=ensetzbaren Bereichen besteht, die jeweils mit einem der zwei Sätze von Kontakten oder mit zwei zugewandten Kontakten des einen und des anderen der zwei Sätze ausgestattet sind.

9. Leiste nach Anspruch 7, dadurch gekennzeichnet, daß sie ferner ein Massemodul (6') umfaßt, das analog zu den Verbindungsmodulen an einem Ende der Halterung (5) montiert ist und nur mit zwei zugewandten Schneidkontakten ausgestattet ist.

10. Leiste nach einem der Ansprüche 6 und 9, dadurch gekennzeichnet, daß die Schneidkontakte (7) jeweils einen ersten Bereich, als vorderer Bereich bezeichnet, mit im wesentlichem Z-förmigem Querschnitt, der axial geschlitzt ist und schräg an der Reihe von Kontakten in einem vorderen Bereich der Kammern (61) jedes Moduls (6) aufgenommen ist, und einen entgegengesetzten zweiten Bereich (75), als hinterer Bereich bezeichnet, aufweisen, der an einen an nur einer Seite des ersten Bereichs überstehenden elastischen seitlichen Fortsatz (76) gekoppelt ist, wobei die zwei seitlichen Fortsätze von zwei in den Aussparungen (61) zugewandt plazierten Kontakten im hinteren zentralen Bereich jedes Verbindungsmoduls (6) elastisch aneinanderdrücken und dabei zwischen sich eine der Laschen (80) des Massesammlers (8) einklemmen, wenn die zwei Kontakte Massekontakte sind.

11. Leiste nach Anspruch 10, dadurch gekennzeichnet, daß die Kontakte (7) einen Elastizitätsschlitz (77B) für den seitlichen Fortsatz umfassen, der sich von dem seitlichen Fortsatz aus zwischen dem hinteren Bereich und einem nicht geschlitzten Zwischenbereich (74) des Kontakts erstreckt.

12. Leiste nach einem der Ansprüche 6 und 9, dadurch gekennzeichnet, daß die Schneidkontakte (107) jeweils einen vorderen Bereich mit U-förmigem Querschnitt, der einen Basisast und zwei Seitenäste definiert und sich senkrecht zu der Reihe von Kontakten erstreckt, in einem vorderen Bereich des Moduls (106) und einen hinteren Bereich (175) umfassen, der an den Basisast und einen an nur einer Seite des Kontakts überstehenden elastischen seitlichen Fortsatz für seine elastische Verbindung mit dem Fortsatz des zugewandten Kontakts in dem Modul gekoppelt ist, und zwei Schneidschlitze (170A, 170B) zwischen dem Basisast und dem einen und dem anderen der Seitenäste des vorderen Bereichs umfassen.

13. Leiste nach einem der Ansprüche 5, 10 und 12, dadurch gekennzeichnet, daß der Massesammler (8) ein Metallstab ist, der an der Rückseite des Bodens (50) der Halterung (5) in Längsrichtung aufgenommen und gehalten ist und dessen Laschen (80) an einer seiner Flächen überstehen und in dem zentralen hinteren Bereich der verschiedenen in der Halterung (5) plazierten Module (6, 6") durch Durchgänge (55) aufgenommen sind, die entsprechend an dem Boden (50) der Halterung (5) vorgesehen sind, und von dem wenigstens ein erstes seiner Enden mit einem an die äußere Masse angeschlossenen Chassis (2) verbunden ist.

14. Leiste nach Anspruch 13, dadurch gekennzeichnet, daß der Massesammler (8) zwei gekrü=te seitliche Füße (84) an dem ersten seiner Enden, einen geknickten endständigen Fuß (85) an diesem ersten Ende, gegenüber der anderen Seite des Stabes, und an dem endständigen Fuß (85) zwei zu dem Stab hin gebogene seitliche Klauen (86) für die elektrische Verbindung des Massesammlers mit einem auf die äußere Masse gelegten metallischen Chassis umfaßt.

15. Leiste nach einem der Ansprüche 13 und 14, dadurch gekennzeichnet, daß sie ferner wenigstens einen Gelenkfuß (11) und wenigstens einen entgegengesetzten Verriegelungsfuß (12) umfaßt, wobei die Gelenk- und Verriegelungsfüße an der Rückseite des Bodens (50) der Halterung, im wesentlichen an dem einen bzw. dem anderen ihrer Enden überstehen, für den Halt der Halterung an dem Chassis (2).

16. Leiste nach Anspruch 15, dadurch gekennzeichnet, daß sie zwei Verriegelungsfüße (12) umfaßt, die nebeneinander und fest mit einem ersten der Enden des Bodens (50) der Halterung (5) verbunden vorgesehen sind, die jeweils einen elastischen Endbereich (12A) aufweisen und einen Zwischensteg (12B) tragen, der an den Endbereichen der Verriegelungsfüße übersteht und mit ihren zugewandten Rändern verbunden ist.

17. Leiste nach einem der Ansprüche 13 bis 16, dadurch gekennzeichnet, daß die Halterung (5) außen wenigstens ein Führungselement umfaßt, das durch einen hinteren Drahtdurchgangsring (14), eine Serie von hinteren Leitungsführungsrippen (44), einen seitlichen Drahtführungskamm (40), eine Serie von vorderen Drahtführungskerben (58) oder wenigstens einen endständigen Drahtdurchgangsring (13) gebildet ist.

18. Leiste nach Anspruch 17, dadurch gekennzeichnet, daß sie einen um den Rand einer der Seiten (51) der Halterung (5) gelenkigen Deckel (9) umfaßt.

19. Leistenanordnung, die mehrere Leisten nach Anspruch 15 auf dem Chassis umfaßt, wobei das Chassis einen U-förmigen Querschnitt hat und eine Basis und zwei Äste umfaßt, dadurch gekennzeichnet, daß sie ein Gelenkteil (3) umfaßt, das abnehmbar an dem Rand eines ersten (21) der Äste des Chassis montiert ist, und daß der zweite Ast (22) des Chassis Verriegelungskerben (26) für die Leisten (1) aufweist.

20. Anordnung nach Anspruch 19, dadurch gekennzeichnet, daß die Verriegelungskerben eine Kreuzform haben.

21. Anordnung nach Anspruch 19, dadurch gekennzeichnet, daß das Gelenkteil (3) einen länglichen flachen Träger (30) umfaßt, der einerseits Haltefüße (31), die an einer ersten der Seiten des Trägers überstehen und jede mit einem endständigen Einhakzahn (31A) versehen sind, und andererseits wenigstens einen Trägerarm (35) umfaßt, der an der zweiten Seite des Trägers übersteht und mit zwei entgegengesetzten Gelenkfingern (36) versehen ist, wobei diese Finger parallel zur Mittelachse des Trägers sind, und daß der erste Ast (21) des Chassis Langlöcher (25) entlang seines eigenen Randes aufweist, die die Zähne der verschiedenen Haltefüße (31) aufnehmen.

22. Anordnung nach Anspruch 21, dadurch gekennzeichnet, daß die Gelenkfinger (36) zwei entgegengesetzte Abflachungen (36A) an ihrer Peripherie aufweisen.

23. Anordnung nach Anspruch 20, dadurch gekennzeichnet, daß die Haltefüße (31) abwechselnd zur einen und anderen Seite der Mittelachse des Trägers (30) versetzt sind, wobei der endständige Zahn an jedem von ihnen dieser Mittelachse zugewandt ist.

24. Anordnung nach Anspruch 20, dadurch gekennzeichnet, daß das Gelenkteil (3) ferner Anschläge (339 aufweist, die an der zweiten Fläche des Trägers (30) überstehen und im wesentlichen entlang des äußeren Randes des als an dem ersten Ast des Chassis plaziert angenommenen Trägers (30) vorgesehen sind, wobei sie den Gelenkfingern (36) jeder Leiste (1) zugewandt sind, um die Öffnung der entsprechenden Leiste an dem Chassis zu begrenzen.

25. Anordnung nach Anspruch 20, dadurch gekennzeichnet, daß das Gelenkteil (3) wenigstens einen inneren Drahtdurchgangsring (34) aufweist, der seitlich übersteht und an dem inneren Rand des als an dem Chassis plaziert angenommenen Trägers (30) gebildet ist.
